# EUROPÄISCHE PATENTANMELDUNG

(11) **EP 2 799 639 A1**
(43) Veröffentlichungstag der Anmeldung: **05.11.2014**
(21) Anmeldenummer: 14166631.3
(22) Anmeldetag: 30.04.2014
(51) Int. Cl.: E04B 1/80, E04C 2/16

(54) **Dämmplatte zur Dämmung einer Gebäudefassade**

(30) Priorität: 03.05.2013 DE 202013101931 U
(71) Anmelder: Huppenberger, Gerhard, 94566 Riedhütte (DE)
(72) Erfinder: Huppenberger, Gerhard, 94566 Riedhütte (DE)
(74) Vertreter: advotec.

(57) **Zusammenfassung**

Dämmplatte zur Dämmung einer Gebäudefassade, dadurch gekennzeichnet, dass die Dämmplatte (1) aus Stroh (2), welches mittels eines Klebstoffes zusammengehalten wird, aufgebaut ist.

## Beschreibung

Die vorliegende Erfindung betrifft eine Dämmplatte zur Dämmung einer Gebäudefassade.

Aus dem Stand der Technik ist eine Vielzahl von Dämmstoffen bekannt, die zur Schallund/oder Wärmedämmung von Gebäudefassaden verwendet werden können. Aus der DE 299 15 463 U1 ist beispielsweise ein Dämmelement zur Wärme- und/oder Schalldämmung von Gebäudewänden bekannt, das aus einer Schicht aus faserigem Dämmstoff und einer Beschichtung aus ausgeschäumtem Natrium- oder Kaliumwasserglas besteht.

In der DE 199 30 844 A1 wird die Verwendung einer flächigen Verbundplatte als schalldämmendes Element beschrieben. Die Verbundplatte besteht aus zwei beabstandeten parallelen Kunststoffplatten, die über zwischen ihnen verlaufenden Stegen miteinander verbunden sind.

Weitere aus dem Stand der Technik bekannte Fassadendämmungen umfassen Zelluloseflocken, Steinwolle sowie Polystyrolplatten.

Die aus dem Stand der Technik bekannten Fassadendämmungen haben jedoch diverse Nachteile. So sind viele der bekannten Dämmstoffe nicht diffusionsoffen, sondern nur bedingt, und dichten ein Gebäude quasi hermetisch ab. Wird bei derartig gedämmten Gebäuden dann unzureichend gelüftet, kommt es oft schon nach kurzer Zeit zu Schimmelbildung am und im Gebäude.

Ein weiterer Nachteil der aus dem Stand der Technik bekannten Dämmmaterialien besteht darin, dass diese nach einem Abbruch schlecht recyclebar und dadurch umweltbelastend sind. Auch die Herstellung vieler Dämmmaterialien (z. B. Polystyrol) ist umweltbelastend. Zudem werden bei der Herstellung der aus dem Stand der Technik bekannten Dämmmaterialien Rohöl und andere nicht nachwachsende Rohstoffe benötigt. Dies trägt - neben einer Umweltbelastung - auch zu erhöhten Herstellungskosten bei.

Der vorliegenden Erfindung liegt die Aufgabe zugrunde, ein Dämmmaterial zur Verfügung zu stellen, welches die o. g. Nachteile aus dem Stand der Technik überwindet.

Diese Aufgabe wird erfindungsgemäß gelöst durch eine Dämmplatte zur Dämmung einer Gebäudefassade, welche dadurch gekennzeichnet ist, dass die Dämmplatte aus Stroh, welches mittels eines Klebstoffs zusammengehalten wird, aufgebaut ist.

Durch die Tatsache, dass die erfindungsgemäße Dämmplatte aus Stroh aufgebaut ist, ist es möglich, die erfindungsgemäße Dämmplatte äußerst kostengünstig herzustellen. Der nachwachsende Rohstoff Stroh ist in großen Mengen erhältlich und seine Verwendung als Dämmmaterial ist äußert umwelt- und ressourcenschonend. Ein weiterer großer Pluspunkt der erfindungsgemäßen Dämmplatte besteht darin, nahezu komplett diffusionsoffen zu sein. Dies bedeutet wiederum, dass Feuchtigkeit im Mauerwerk eines Gebäudes nicht im Mauerwerk gehalten, sondern nach außen durch die erfindungsgemäße Dämmplatte hindurch abgegeben werden kann. Dadurch wird einer Schimmelentstehung entgegengewirkt.

Ein weiterer wichtiger Vorteil der erfindungsgemäßen Dämmplatte besteht darin, dass sie trotz ihrer Diffusionsoffenheit eine hervorragende Wärmedämmung ermöglicht. Die hervorragenden Isoliereigenschaften lassen sich u. a. dadurch erklären, dass die zwischen den Strohhalmen gebildeten Luftkammern beste Isoliereigenschaften aufweisen. Luft ist bekanntermaßen ein äußerst schlechter Wärmeleiter.

Ein weiterer hervorzuhebender Vorteil der erfindungsgemäßen Dämmplatte besteht in der schweren Entflammbarkeit. So wird durch die erfindungsgemäße Dämmplatte ein sehr gutes Brandschutzverhalten erreicht.

Die erfindungsgemäße Dämmplatte eignet sich sowohl zur Sanierung von Altbauten als auch als Dämmaterial von Neubauten.

Der Klebstoff, mittels dessen die Strohhalme der erfindungsgemäßen Dämmplatte zusammengehalten werden, ist vorzugsweise ausgewählt aus der Gruppe von Leim, insbesondere Pflanzenleim sowie Stärkekleber. Die verwendeten Klebstoffe sind vorzugsweise umweltfreundlich und können hierzu pflanzlichen Ursprungs sein.

Eine bevorzugte Ausführungsform einer erfindungsgemäßen Dämmplatte wird durch folgende Vorgehensweise hergestellt:
a) Vermischen von, vorzugsweise gehäckseltem Stroh mit Klebstoff;
b) leichtes Verpressen der Stroh-Klebstoff-Mischung zu einer Platte in gewünschter Größe;
c) Stehenlassen der so hergestellten Platte zum Austrocknen derselben.

Durch das leichte Verpressen der Stroh-Klebstoff-Mischung wird eine kompakt ausgebildete Dämmplatte erzeugt, die dennoch luftgefüllte Zwischenräume (Luftkammern) aufweist. Hierdurch werden Dämmplatten mit geringem Gewicht erzeugt, die aber trotzdem hervorragende Isoliereigenschaften aufweisen.

Die erfindungsgemäße Dämmplatte hat vorzugsweise eine Länge von ca. 1 Meter, eine Breite von ca. 50 cm und eine Dicke von ca. 12-14 cm.

Mit Vorteil werden die erfindungsgemäßen Dämmplatten nach dem Pressvorgang zum Austrocknen erwärmt, insbesondere auf eine Temperatur von ca. 25° - 50° Celsius. Dadurch kann der Klebstoff zwischen den Strohhalmen schnell und gründlich austrocknen, sodass Dämmplatten hoher Stabilität erzeugt werden können.

Die vorliegende Erfindung betrifft ferner ein Gebäude, welches dadurch gekennzeichnet ist, dass auf mindestens einer Außenwand des Gebäudes erfindungsgemäße Dämmplatten angeordnet sind. Ein derartiges Gebäude weist die o. g. dargelegten Vorteile der erfindungsgemäßen Dämmplatten auf. So ist das erfindungsgemäße Gebäude schimmelbeständig, zeigt kaum Wärmeverluste und erfüllt sehr gute Brandschutzeigenschaften. Auch eine Entsorgung des Gebäudes nach einem möglichen Abriss ist völlig problemlos, da das Dämmmaterial keinerlei Umweltbelastungen mit sich bringt und problemlos entsorgt werden kann.

Beim erfindungsgemäßen Gebäude können die erfindungsgemäßen Dämmplatten auf der mindestens einen Außenwand aufgeklebt und/oder mittels mechanischen Befestigungsmitteln, insbesondere Befestigungsstiften aufgebracht sein. Der verwendete Klebstoff (Armierungskleber) zum Aufkleben der erfindungsgemäßen Dämmplatten an einer Außenwand kann beispielsweise mit dem Klebstoff, welcher die Strohhalme der erfindungsgemäßen Dämmplatten zusammenhält, identisch sein.

Mit Vorteil weisen die Dämmplatten auf ihren der Gebäudewand abgekehrten Seiten mindestens eine weitere Materialschicht, vorzugsweise mindestens eine Putzschicht auf. Nach dem Verputzen der erfindungsgemäßen Dämmplatten auf dem erfindungsgemäßen Gebäude sind die Dämmplatten weitestgehend vor Umwelteinflüssen, wie beispielsweise Autoabgasen, Industrieabgasen, etc. geschützt.

Weitere Vorteile und vorteilhafte Ausgestaltungen des Gegenstandes der Erfindung sind der Beschreibung, der Zeichnung und den Ansprüchen entnehmbar. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In der Zeichnung zeigt:

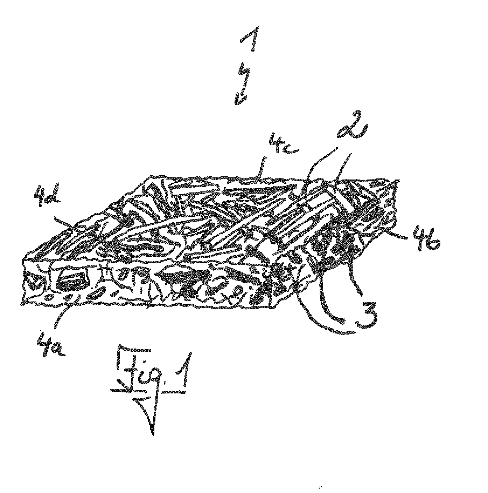

- Fig. 1: eine perspektivische Darstellung einer erfindungsgemäßen Dämmplatte.

Figur 1 zeigt eine erfindungsgemäße Dämmplatte 1 zur Dämmung einer Gebäudefassade, welche aus Strohhalmen 2, welche mittels eines Klebstoffes zusammengehalten werden, aufgebaut ist. Bei dem hier verwendeten Klebstoff handelt es sich um einen Klebstoff pflanzlicher Herkunft, nämlich Stärkekleber. Dieser ist äußerst effektiv beim Verkleben der einzelnen Strohhalme 2 und zudem umweltfreundlich.

Bei den Strohhalmen 2 handelt es sich um gehäckselte Strohhalme, welche beim Herstellungsprozess der Dämmplatte 1 zunächst mit Stärkekleber vermengt werden. Anschließend wird das Stroh-Klebstoff-Gemisch leicht gepresst und in die hier dargestellte Form gebracht. Durch das leichte Verpressen wird - im Gegensatz von zu starkem Verpressen - erreicht, dass sich zwischen den einzelnen Strohhalmen 2 Luftkammern 3 ausbilden. Die Luftkammern 3 bewirken eine hohe Dämmwirkung der Dämmplatte 1, da die Luft in den Luftkammern 3 eine sehr geringe Wärmeleitfähigkeit aufweist.

Zum Dämmen einer Gebäudefassade wird eine Vielzahl von Dämmplatten 1 nebeneinander und untereinander derart an der Gebäudefassade befestigt, dass die einzelnen Dämmplatten mit ihren vier Stirnseiten 4a, 4b, 4c, 4d Kontakt zueinander haben. Dadurch wird eine geschlossene Dämmschicht auf der Gebäudewand erzielt.

## Patentansprüche

1. Dämmplatte zur Dämmung einer Gebäudefassade, **dadurch gekennzeichnet, dass** die Dämmplatte (1) aus Stroh (2), welches mittels eines Klebstoffes zusammengehalten wird, aufgebaut ist.

2. Dämmplatte nach Anspruch 1, **dadurch gekennzeichnet, dass** der Klebstoff ausgewählt ist aus der Gruppe von Leim, insbesondere Pflanzenleim und Stärkekleber.

3. Dämmplatte nach einem der Ansprüche 1 oder 2, **dadurch gekennzeichnet, dass** sie durch folgende Vorgehensweise hergestellt wird:
a) Vermischen von, vorzugsweise gehäckseltem Stroh (2) mit Klebstoff;
b) leichtes Verpressen der Stroh-Klebstoff-Mischung zu einer Platte (1);
c) Stehenlassen der so hergestellten Platte zum Austrocknen derselben.

4. Dämmplatte nach Anspruch 3, **dadurch gekennzeichnet, dass** die Dämmplatte (1) zum Austrocknen erwärmt, insbesondere auf eine Temperatur von ca. 25°-50° Celsius erwärmt werden.

5. Gebäude, **dadurch gekennzeichnet, dass** auf mindestens einer Außenwand des Gebäudes Dämmplatten (1) nach einem der Ansprüche 1 bis 4 angeordnet sind.

6. Gebäude nach Anspruch 5, **dadurch gekennzeichnet, dass** die Dämmplatten (1) auf der mindestens einen Außenwand aufgeklebt und/oder mittels mechanischen Befestigungsmitteln, insbesondere Befestigungsstiften aufgebracht sind.

7. Gebäude nach einem der Ansprüche 5 oder 6, **dadurch gekennzeichnet, dass** die Dämmplatten (1) auf ihren der Gebäudewand abgekehrten Seiten mindestens eine weitere Materialschicht, vorzugsweise mindestens eine Putzschicht aufweisen.
